# EUROPEAN PATENT SPECIFICATION

(11) **EP 4 300 726 B1**
(45) Date of publication and mention of the grant of the patent: **03.06.2026**
(21) Application number: 23772392.9
(22) Date of filing: 09.03.2023
(51) Int. Cl.: H01M 50/526, H01M 50/503, H01M 50/522, H01M 50/517

(54) **FLEXIBLE BUSBAR HAVING COVER MEMBER CAPABLE OF PREVENTING CORROSION AND BATTERY MODULE INCLUDING SAME**
FLEXIBLE SAMMELSCHIENE MIT ABDECKELEMENT ZUR VERHINDERUNG VON KORROSION UND BATTERIEMODUL DAMIT
BARRE OMNIBUS FLEXIBLE COMPRENANT UN ÉLÉMENT DE COUVERCLE APTE À PRÉVENIR LA CORROSION ET MODULE DE BATTERIE COMPRENANT CELLE-CI

(30) Priority: 19.05.2022 KR 20220061326
(43) Date of publication of application: 03.01.2024
(73) Proprietor: LG ENERGY SOLUTION, LTD., Seoul 07335 (KR)
(72) Inventor: Seon, Sang Ok, Daejeon 34122 (KR)
(74) Representative: Goddar, Heinz J.
(86) International application number: PCT/KR2023/003244
(87) International publication number: WO 2023/224233

(56) References cited:
- EP-A1- 2 683 040
- EP-A1- 3 982 487
- EP-A1- 3 993 141
- JP-A- 2021 077 568
- KR-A- 20100 054 626
- KR-A- 20170 068 371
- KR-A- 20200 116 880
- KR-A- 20200 116 880
- KR-A- 20210 027 857
- US-A1- 2018 026 250

## Description

### [Technical Field]

The present invention relates to a flexible busbar having a cover member capable of preventing corrosion and a battery module including the same, and more particularly to a flexible busbar having a cover member capable of preventing corrosion that may occur as the result of a metal busbar body constituting the flexible busbar being exposed to a salt damage environment and a battery module including the same.

### [Background Art]

With recent development of alternative energies due to air pollution and energy depletion caused as the result of use of fossil fuels, demand for secondary batteries capable of storing electrical energy that is produced has increased. The secondary batteries, which are capable of being charged and discharged, are intimately used in daily life. For example, the secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles.

For example, in a vehicle, an energy storage system, etc., a plurality of battery modules or battery packs is connected to each other in series or in parallel in order to increase the capacity and output thereof. In general, the battery modules or the battery packs are electrically connected to each other via a busbar.

The busbar may be classified as a rigid busbar or a flexible busbar. The flexible busbar is mainly used to connect various kinds of electronic devices to each other in addition to series or parallel connection between battery modules or battery packs. In particular, the flexible busbar is used on a complicated route having a narrow or bent space.

Meanwhile, in an energy storage system, a wind power plant, or a tidal power plant installed near the waterfront, a secondary battery is used in order to store or supply produced electricity. However, air near the waterfront contains a large amount of salt. If the busbar is exposed to such air, the busbar may become corroded, which may lead to a major accident.

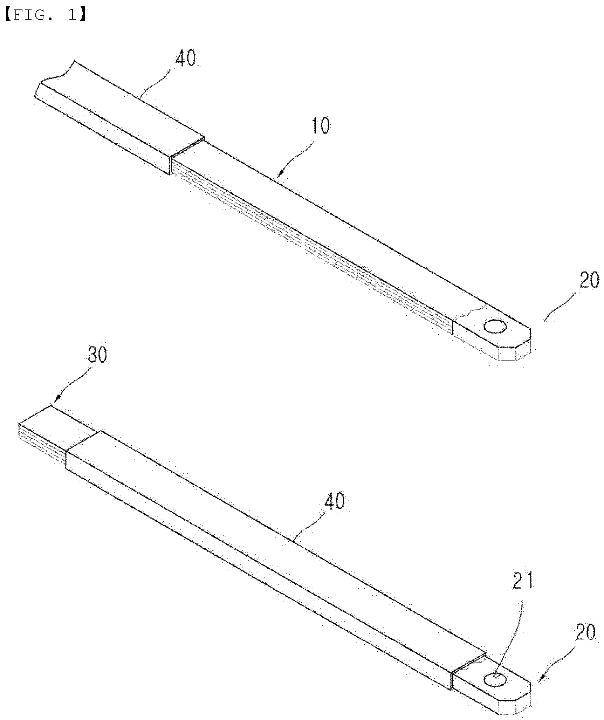

FIG. 1 is a perspective view showing a conventional flexible busbar. As shown in FIG. 1, the conventional flexible busbar, which is constituted by stacked flat conductors, includes a conduction portion 10, a first terminal portion 20 located at one side of the conduction portion 10, a second terminal portion 30 located at the other side of the conduction portion 10, and a tube member 40 configured to wrap the conduction portion 10.

Since the conventional flexible busbar can be curved or bent, cable connection in a narrow space is easily achieved.

Since the first terminal portion 20 and the second terminal portion 30 are exposed to air, however, the terminal portions may be corroded at the time of contacting sea breeze or salt water.

### (Prior Art Document)

(Patent Document 1) Korean Patent Application Publication No. 2020-0116880
US 2018/0026250 A1 discloses a bus bar assembly including a first layer and a second layer directly adjacent the first layer. The first layer and the second layer each have a section made of a first material and extending from a first end portion to an opposing, second end portion. The first and second end portions include a second material different than the first material. An exemplary method of forming a bus bar includes joining a section of a first bus bar layer and a section of a second bus bar layer to a respective first end portion and a respective second end portion. The sections of the first and second bus bar layers are made of a first material. The first and second end portions include a second material different than the first material.
EP 3 982 487 A1 discloses an inter-bus bar comprising a first bus bar including a first body region having a fastening hole formed at one end thereof and a first length adjusting region configured to extend by a predetermined length from the other end of the first body region; and a second bus bar including a second body region having a fastening hole formed at one end thereof and a second length adjusting region configured to extend by a predetermined length from the other end of the second body region, the second bus bar being configured to be coupled to or released from the first bus bar, wherein the first length adjusting region and the second length adjusting region form a connection portion where they are at least partially overlapped, and the first length adjusting region and the second length adjusting region are attached to or detached from each other at different relative positions to change the length of the connection portion.
KR 10-2020-0116880 A discloses a flexible bus bar including a conductor portion; a terminal portion; and a tube member.

### [Disclosure]

### [Technical Problem]

The present invention has been made in view of the above problems, and it is an object of the present invention to provide a flexible busbar configured not to be corroded even in a salt damage environment and a battery module including the same.

### [Technical Solution]

In order to accomplish the above object, a flexible busbar having a cover member capable of preventing corrosion according to the present invention includes a busbar body (100) having a structure in which metal sheets each having a predetermined width, thickness, and length are stacked, the busbar body being provided in each of opposite ends in a longitudinal direction thereof with a first through-hole (110) configured to allow a fastening member (B) to be inserted therethrough, a first cover member (200) configured to cover a middle part of the busbar body (100), a second cover member (300) configured to cover each of the opposite ends of the busbar body (100) the metal sheets comprise a copper sheet and an aluminum sheet; the second cover member (300) is made of rubber or silicone; and the second cover member (300) is disposed on an upper surface, a side surface, a front surface, and a rear surface of the busbar body (100) and in tight contact with each surface, wherein a lower surface of the second cover member (300) is open.

Also, in the flexible busbar according to the present invention, the first cover member (200) may be made of an insulative material.

Also, in the flexible busbar according to the present invention, the insulative material may be at least one of an epoxy resin and a polyester resin, which are thermosetting resins.

Also, in the flexible busbar according to the present invention, the second cover member (300) may be provided with a second through-hole (310) configured to allow the fastening member (B) to be inserted therethrough.

Also, in the flexible busbar according to the present invention, the first cover member (200) and the second cover member (300) may be positioned such that a portion of the first cover member and a portion of the second cover member overlap each other.

In addition, the present invention provides a battery module including the flexible busbar having the above features.

### [Advantageous Effects]

As is apparent from the above description, a flexible busbar according to the present invention has an advantage in that a first cover member is mounted to the middle of a busbar body constituted by metal sheets and a second cover member is provided at each of opposite ends of the busbar body, whereby corrosion of the flexible busbar is prevented even in a salt damage environment.

### [Description of Drawings]

FIG. 1 is a perspective view showing a conventional flexible busbar.
FIG. 2 is a perspective view of a flexible busbar according to a first preferred embodiment of the present invention.
FIG. 3 is a plan view of the flexible busbar according to the first preferred embodiment of the present invention.
FIG. 4 is a sectional view showing the state in which a fastening member is coupled to the flexible busbar, taken along line A-A' of FIG. 2.
FIG. 5 is a view illustrating a process of manufacturing the flexible busbar according to the first preferred embodiment of the present invention.
FIG. 6 is a perspective view of a flexible busbar according to a second preferred embodiment of the present invention.
FIG. 7 is a plan view of the flexible busbar according to the second preferred embodiment of the present invention.
FIG. 8 is a sectional view showing the state in which a fastening member is coupled to the flexible busbar, taken along line A-A' of FIG. 6.
FIG. 9 is a perspective view of a second cover member according to a second preferred embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a flexible busbar having a cover member capable of preventing corrosion according to the present invention and a battery module including the same will be described with reference to the accompanying drawings.

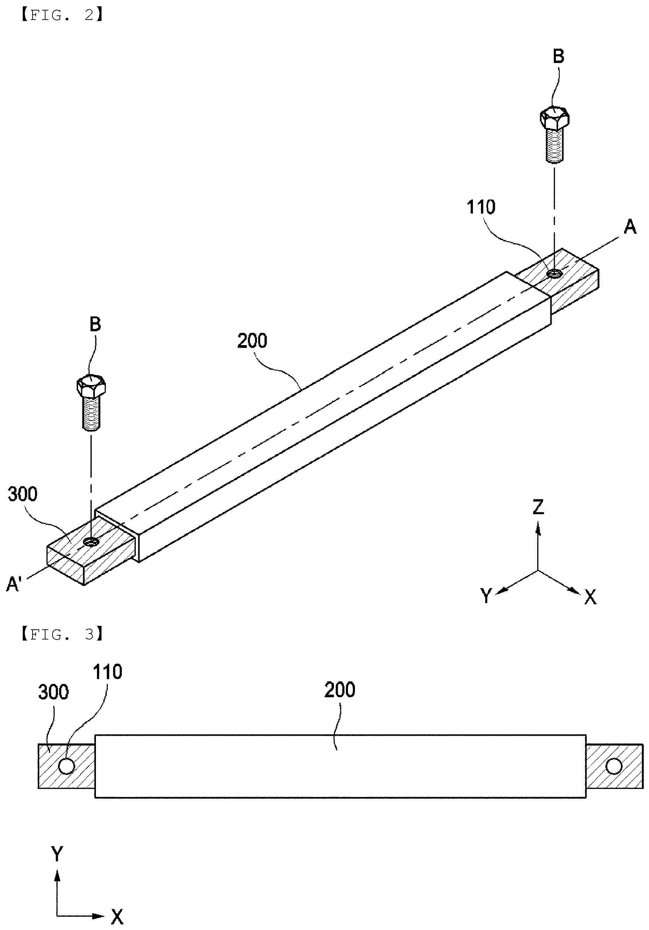

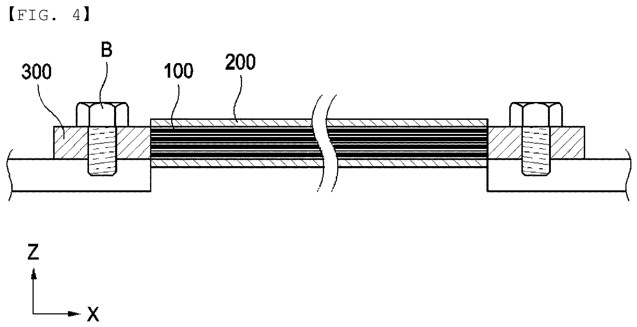

FIG. 2 is a perspective view of a flexible busbar according to a first preferred embodiment of the present invention, FIG. 3 is a plan view of the flexible busbar according to the first preferred embodiment of the present invention, and FIG. 4 is a sectional view showing the state in which a fastening member is coupled to the flexible busbar, taken along line A-A' of FIG. 2.

As shown in FIGS. 2 to 4, the flexible busbar according to the present invention includes a busbar body 100, a first cover member 200, and a second cover member 300.

First, the busbar body 100 has a structure in which metal sheets each having a predetermined width, thickness, and length are stacked, and a first through-hole 110 is formed in the vicinity of the edge of each of opposite ends of the busbar body in a longitudinal direction thereof.

Here, the metal sheets each having the predetermined width, thickness, and length are copper sheets and aluminum sheets, which are alternately stacked. The cooper sheets are located at the uppermost side and the lowermost side, and the aluminum sheet is located in the middle.

Of course, a plurality of stacks, each of which is constituted by a copper sheet, an aluminum sheet, and a copper sheet stacked from above, may be stacked. In addition, a copper sheet, an aluminum sheet, a copper sheet, an aluminum sheet, and a copper sheet may be stacked in that order.

The first through-hole 110 is formed in the vicinity of the edge of each of opposite ends of the busbar body 100 in the longitudinal direction thereof (Y-axis direction). A fastening member B is inserted through the first through-hole 110 in order to fix the busbar body 100 to a target to be connected.

Here, the fastening member B may be a bolt constituted by a cylindrical screw portion having a screw thread formed thereon and a head portion having a larger diameter than the screw portion.

The first cover member 200 is located at a middle part of the busbar body excluding the edges of the opposite ends thereof where the first through-hole 110 is formed. The first cover member 200 is configured to prevent electrical conduction to a nearby metal material and to prevent attachment of external foreign matter to the busbar body 100.

The first cover member 200 may be formed in the shape of a hollow tube so as to be mounted to the busbar by fitting. Alternatively, the first cover member may be formed by coating.

The material for the first cover member 200 is not particularly restricted as long as the first cover member is capable of performing the above function. As an example, at least one of an epoxy resin and a polyester resin, which are thermosetting resins, may be used.

The second cover member 300 is located at the edge of each of the opposite ends of the busbar body 100 where the first through-hole 110 is formed.

The second cover member 300 is configured to prevent corrosion at the edge of each of the opposite ends of the busbar body 100. Specifically, the flexible busbar may be exposed to air containing salt depending on the environment in which the flexible busbar is used, and it may cause any aluminum constituting the busbar body 100 to become corroded. The second cover member 300, however, prevents exposure of aluminum to the outside, thereby inhibiting corrosion.

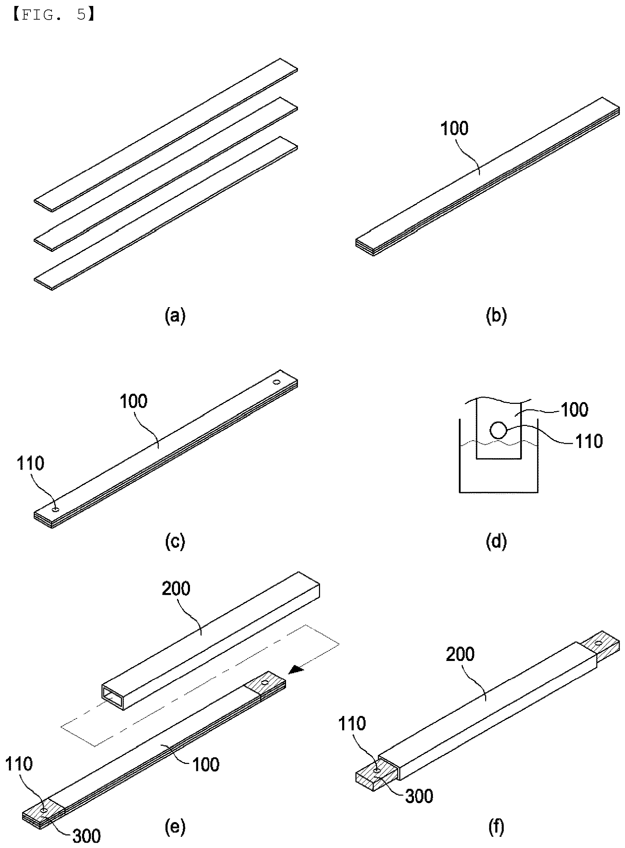

FIG. 5 is a view illustrating a process of manufacturing the flexible busbar according to the first preferred embodiment of the present invention.

Referring to FIG. 5 (which is not according to the appended claims) the process of manufacturing the flexible busbar includes a step of preparing a plurality of metal sheets constituted by a copper sheet and an aluminum sheet ((a) of FIG. 5), a step of stacking the plurality of metal sheets to form one stack ((b) of FIG. 5), a step of forming a first through-hole 110 in the vicinity of the edge of each of opposite ends of the prepared stack to prepare a busbar body 100 ((c) of FIG. 5), a step of soaking the opposite ends of the busbar body 100 in a plating solution to form a second cover member 300, which is a metal film layer ((d) of FIG. 5), and a step of coupling a first insulative cover member 200 to a middle part of the busbar body 100 ((e) of FIG. 5). (f) of FIG. 5 shows a flexible bus bar manufactured through the above-described process.

Meanwhile, it is preferable for a portion of the first cover member 200 and a portion of the second cover member 300 to overlap each other in order to surely prevent exposure of the aluminum sheet of the busbar body to the outside.

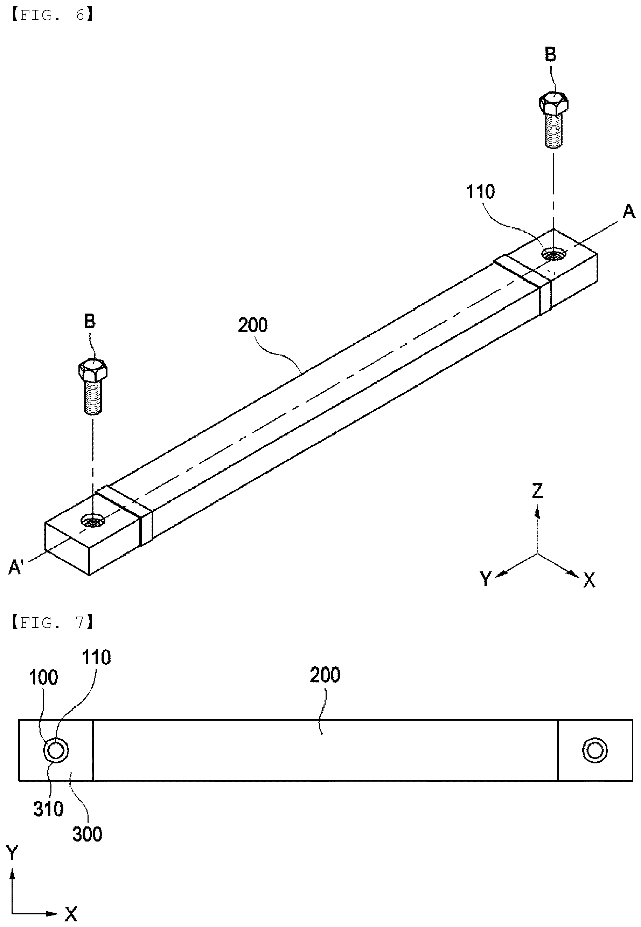

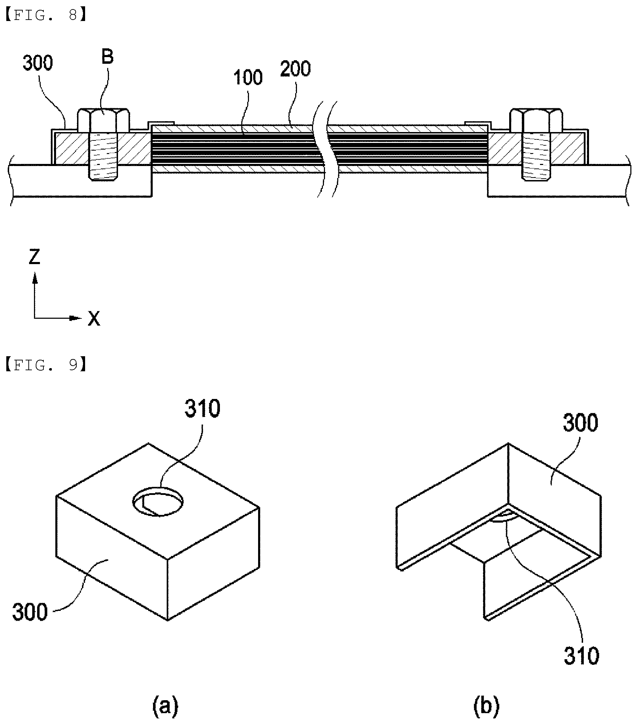

FIG. 6 is a perspective view of a flexible busbar according to a second preferred embodiment of the present invention, FIG. 7 is a plan view of the flexible busbar according to the second preferred embodiment of the present invention, and FIG. 8 is a sectional view showing the state in which a fastening member is coupled to the flexible busbar, taken along line A-A' of FIG. 6.

Referring to FIGS. 6 to 8, the flexible busbar according to the second embodiment of the present invention is identical in construction to the flexible busbar according to the first embodiment of the present invention described with reference to FIGS. 2 to 4 except for a second cover member 300, and therefore a description of the same construction will be omitted.

In the flexible busbar according to the present invention, the second cover member 300 is made of rubber or silicone and is located so as to wrap each of opposite ends of a busbar body 100.

Here, the insulative material is rubber or silicone. In this case, there is an advantage in that manufacturing cost is lower than if the second cover member is made of a metal material, such as tin or nickel.

The second cover member 300 is located at each of the opposite ends of the busbar body 100. It is preferable for one edge of the second cover member 300 to extend to a part of one edge of a first cover member 200 such that a portion of the first cover member 200 and a portion of the second cover member 300 overlap each other.

Here, the second cover member 300 may be fixed to each of the opposite ends of the busbar body 100 by fitting. Alternatively, the second cover member 300 may be securely fixed to each of the opposite ends of the busbar body 100 using a known adhesive having a high flash point.

FIG. 9 is a perspective view of a second cover member according to an embodiment of the present invention. Referring to FIGS. 6 and 9, the second cover member 300 is formed in a shape that wraps an upper surface (Z-axis direction), a side surface (Y-axis direction), a front surface (X-axis direction), and a rear surface (X-axis direction) of each of the opposite ends of the busbar body 100. That is, a lower surface (Z-axis direction) of each of the opposite ends of the busbar body 100 is open.

In other words, the lower surface (Z-axis direction), at which a target to be electrically connected to the flexible bar is located, is open.

Meanwhile, a second through-hole 310, through which a fastening member B may be inserted, is formed in the second cover member 300. The inner diameter of the second through-hole 310 may be equal to or greater than the outer diameter of a head of the fastening member B.

Of course, it is preferable for the second through-hole 310 formed in the second cover member 300 to be located on the same vertical line as the first through-hole 110 of the busbar body 100 such that the fastening member B is inserted through the first through-hole 110 of the busbar body 100.

In addition, the present invention provides a battery module including the flexible busbar.

### (Description of Reference Symbols)

100: Busbar body
110: First through-hole
200: First cover member
300: Second cover member
310: Second through-hole
B: Fastening member

## Claims

1. A flexible busbar comprising:
a busbar body (100) having a structure in which metal sheets each having a predetermined width, thickness, and length are stacked, the busbar body (100) being provided in each of opposite ends in a longitudinal direction thereof with a first through-hole (110) configured to allow a fastening member (B) to be inserted therethrough;
a first cover member (200) configured to cover a middle part of the busbar body (100);
a second cover member (300) configured to cover each of the opposite ends of the busbar body (100);
the metal sheets comprise a copper sheet and an aluminum sheet;
the second cover member (300) is made of rubber or silicone; and
the second cover member (300) is disposed on an upper surface, a side surface, a front surface, and a rear surface of the busbar body (100) and in tight contact with each surface,
wherein a lower surface of the second cover member (300) is open.

2. The flexible busbar according to claim 1, wherein the first cover member (200) is made of an insulative material.

3. The flexible busbar according to claim 2, wherein the insulative material is at least one of an epoxy resin and a polyester resin, which are thermosetting resins.

4. The flexible busbar according to claim 1, wherein the second cover member (300) is provided with a second through-hole (310) configured to allow the fastening member (B) to be inserted therethrough.

5. The flexible busbar according to claim 1, wherein the first cover member (200) and the second cover member (300) are positioned such that a portion of the first cover member (200) and a portion of the second cover member (300) overlap each other.

6. A battery module comprising the flexible busbar according to any one of claims 1 to 5.

## Patentansprüche

1. Flexible Sammelschiene, umfassend:
einen Sammelschienenkörper (100), der eine Struktur aufweist, in der Metallbleche, die jeweils eine vorbestimmte Breite, Dicke und Länge aufweisen, gestapelt sind, wobei der Sammelschienenkörper (100) an jedem von gegenüberliegenden Enden in einer Längsrichtung davon mit einem ersten Durchgangsloch (110) versehen ist, das konfiguriert ist, um zu ermöglichen, dass ein Befestigungselement (B) dadurch eingeführt wird;
ein erstes Abdeckelement (200), das konfiguriert ist, um einen mittleren Teil des Sammelschienenkörpers (100) abzudecken;
ein zweites Abdeckelement (300), das konfiguriert ist, um jedes der gegenüberliegenden Enden des Sammelschienenkörpers (100) abzudecken;
die Metallbleche ein Kupferblech und ein Aluminiumblech umfassen;
das zweite Abdeckelement (300) aus Gummi oder Silikon hergestellt ist; und
das zweite Abdeckelement (300) auf einer oberen Fläche, einer Seitenfläche, einer vorderen Fläche und einer hinteren Fläche des Sammelschienenkörpers (100) und in engem Kontakt mit jeder Fläche angeordnet ist,
wobei eine untere Fläche des zweiten Abdeckelements (300) offen ist.

2. Flexible Sammelschiene nach Anspruch 1, wobei das erste Abdeckelement (200) aus einem isolierenden Material hergestellt ist.

3. Flexible Sammelschiene nach Anspruch 2, wobei das isolierende Material mindestens eines von einem Epoxidharz und einem Polyesterharz ist, die duroplastische Harze sind.

4. Flexible Sammelschiene nach Anspruch 1, wobei das zweite Abdeckelement (300) mit einem zweiten Durchgangsloch (310) versehen ist, das konfiguriert ist, um zu ermöglichen, dass das Befestigungselement (B) dadurch eingeführt wird.

5. Flexible Sammelschiene nach Anspruch 1, wobei das erste Abdeckelement (200) und das zweite Abdeckelement (300) so positioniert sind, dass ein Abschnitt des ersten Abdeckelements (200) und ein Abschnitt des zweiten Abdeckelements (300) einander überlappen.

6. Batteriemodul, umfassend die flexible Sammelschiene nach einem der Ansprüche 1 bis 5.

## Revendications

1. Barre omnibus flexible comprenant :
un corps de barre omnibus (100) possédant une structure dans laquelle sont empilées des feuilles métalliques ayant chacune une largeur, une épaisseur et une longueur prédéterminées, le corps de barre omnibus (100) étant agencé dans chacun de bouts opposés dans le sens longitudinal de celui-ci, avec un premier trou traversant (110) configuré pour permettre l'insertion d'un élément de fixation (B) à travers celui-ci ;
un premier élément de couvercle (200) configuré pour couvrir une partie médiane du corps de la barre omnibus (100) ;
un deuxième élément de couvercle (300) configuré pour couvrir chacun des bouts opposés du corps de la barre omnibus (100) ;
les feuilles métalliques comprenant une feuille de cuivre et une feuille d'aluminium ;
le deuxième élément de couvercle (300) étant réalisé en caoutchouc ou en silicone; et
le deuxième élément de couvercle (300) étant disposé sur une surface supérieure, une surface latérale, une surface antérieure et une surface postérieure de la barre omnibus (100), et en contact étroit avec chaque surface,
une surface inférieure du deuxième élément de couvercle (300) étant ouverte.

2. Barre omnibus flexible selon la revendication 1, le premier élément de couvercle (200) étant réalisé avec un matériau isolant.

3. Barre omnibus flexible selon la revendication 2, le matériau isolant étant au moins une d'une résine époxy et d'une résine de polyester, qui sont des résines thermodurcissables.

4. Barre omnibus flexible selon la revendication 1, le deuxième élément de couvercle (300) étant équipé d'un deuxième trou traversant (310) configuré pour permettre l'insertion de l'élément de fixation (B) à travers celui-ci.

5. Barre omnibus flexible selon la revendication 1, le premier élément de couvercle (200) et le deuxième élément de couvercle (300) étant positionnés de façon à ce qu'une partie du premier élément de couvercle (200) et une partie du deuxième élément de couvercle (300) se chevauchent.

6. Véhicule comprenant la barre omnibus flexible selon une quelconque des revendications 1 à 5.
